# EUROPÄISCHE PATENTSCHRIFT

(11) **EP 2 804 737 B1**
(45) Veröffentlichungstag und Bekanntmachung des Hinweises auf die Patenterteilung: **24.02.2016**
(21) Anmeldenummer: 13702892.4
(22) Anmeldetag: 18.01.2013
(51) Int. Cl.: B29C 45/72, B29C 45/82, F04B 17/03, F04C 29/04, F04B 53/08, F04C 11/00, H02K 5/04, H02K 5/22, H02K 9/19

(54) **HYDRAULIKEINRICHTUNG MIT EINER TEMPERIEREINRICHTUNG**
HYDRAULIC DEVICE WITH A TEMPERATURE-REGULATING DEVICE
DISPOSITIF HYDRAULIQUE AVEC DISPOSITIF DE RÉGULATION DE LA TEMPÉRATURE

(30) Priorität: 22.01.2012 DE 102012000986
(43) Veröffentlichungstag der Anmeldung: 26.11.2014
(73) Patentinhaber: Arburg GmbH + Co. KG, 72290 Lossburg (DE)
(72) Erfinder: KRAIBÜHLER, Herbert, 72290 Lossburg (DE); DUFFNER, Eberhard, 72181 Starzach (DE)
(74) Vertreter: Reinhardt, Harry
(86) Internationale Anmeldenummer: PCT/EP2013/000151
(87) Internationale Veröffentlichungsnummer: WO 2013/107648

(56) Entgegenhaltungen:
- EP-A1- 0 509 724
- EP-A1- 1 308 261
- EP-A2- 0 778 652
- EP-A2- 0 951 131
- EP-A2- 1 052 408
- EP-A2- 1 574 714
- DE-A1-102006 024 712
- DE-A1-102008 003 724
- JP-A- 11 077 785
- JP-A- H11 314 257
- JP-A- 2004 338 034

## Beschreibung

Die Erfindung betrifft eine Hydraulikeinrichtung zur Versorgung wenigstens eines Verbrauchers mit Hydraulikmedium mit einer Temperiereinrichtung an einer Spritzgießmaschine zur Verarbeitung von Kunststoffen und anderen plastifizierbaren Massen sowie keramischen und pulverförmigen Massen nach dem Oberbegriff des Anspruches 1.

Eine derartige Hydraulikeinrichtung ist aus der JP 11077785 A bekannt, bei der zur Verkürzung der Aufwärmphase einer Spritzgießmaschine eine Hydraulikleitung um den Servomotor einer Hydraulikpumpe gewunden ist.

Aus der AT 653/89 ist eine Hydraulikeinrichtung bekannt, bei der das verwendete Hydraulikmedium, bei dem es sich meist um ein Hydrauliköl handelt, gesondert temperiert wird. Um das Hydraulikmedium an einen Verbraucher zu fördern, wird ein elektrischer Antriebsmotor der Hydraulikpumpe zugeordnet, der während eines Arbeitszyklus veränderlich steuerbar ist, so dass die Leistung der Hydraulikpumpe dem jeweiligen Maschinenerfordernis angepasst ist. Es handelt sich also um eine Konstantpumpe in Verbindung mit einem Servomotor, wobei über die Drehzahl des Servomotors das Hydrauliksystem geregelt wird. Diese Lösung ist vor allem bei seriellem Betätigen von Verbrauchern anwendbar.

Bei einer Spritzgießmaschine gibt es jedoch regelmäßig auch Zustände, in denen ein bestimmter Druck gehalten werden muss, d.h. in denen kein Öl mehr fließt. Da Pumpe und zugeordneter Servomotor jedoch zu kühlen sind, werden bisher Bypasslösungen verwendet, so dass immer noch eine Mindestmenge an Öl zur Kühlung fließt. Dies bedeutet im Umkehrschluss, dass aber auch die Pumpe weiterhin wirkt, d.h. Energie ungenutzt aufgewandt werden muss.

Aus der EP 0 649 722 B2 ist es bekannt, eine Regelpumpe mit einem Drehstrommotor zu betreiben, der über einen Frequenzumrichter in der Drehzahl regelbar ist. Die jeweilige zyklusabhängige Maximalleistung wird von der Regelpumpe vorgegeben, die dann unterhalb ihrer jeweiligen Maximalleistung über den Frequenzumrichter geregelt wird. Auch dadurch ist eine Energieoptimierung mittels drehzahlveränderlichen Motors möglich.

Aus der DE 43 34 134 B4 ist es bekannt, an einer Spritzgießmaschine Servomotor und Ansteuerelektronik mit Flüssigkeit zu kühlen.

Weiteren Stand der Technik zum kühlen von Pumpe und/oder Motor ist aus EP1052408, EP0509724, EP1308261 und JP11077785 bekannt.

Ausgehend von diesem Stand der Technik liegt der Erfindung die Aufgabe zugrunde, eine günstige Energieoptimierung beim Temperieren der Hydraulikeinrichtung zu schaffen.

Diese Aufgabe wird durch eine Hydraulikeinrichtung mit den Merkmalen des Anspruches 1 gelöst.

Um das gesamte Antriebssystem der Hydraulikeinrichtung effizient zu kühlen und zudem möglichst kompakt in einer Baueinheit zu installieren, wird die Hydraulikpumpe temperiert und werden die Hydraulikleitung und/oder die Kühlleitung durch den oder an den Servomotor geführt. Die Kühlung erfolgt dann durch einen Kühlmantel. Dadurch ist es möglich, entweder unmittelbar oder mittelbar die Pumpe und damit auch das Hydraulikmedium zu kühlen. Da die Hydraulikpumpe aber selbst die Komponente ist, die unmittelbar beim Fördern des Hydraulikmediums durch Reibung Wärme erzeugt, ist dadurch eine effiziente Temperierung unmittelbar am Entstehungsort der Wärme möglich. Ziel ist, entweder unmittelbar alle Systeme mit einem Temperiermedium wie z.B. Wasser zu kühlen oder für sich oder in Kombination das Hydraulikmedium, also das Hydrauliköl, gleichzeitig als Kühlmittel zu verwenden, und zwar nicht nur an der Hydraulikpumpe sondern auch am Servomotor. In einer bevorzugten Ausführungsform wird auch die zugehörige Steuereinrichtung für den Servomotor temperiert.

Vorzugsweise wird das Gehäuse der Hydraulikpumpe temperiert, d.h. meist gekühlt. Dies kann vorteilhaft eine Flanschkühlung an den Flanschen der Hydraulikpumpe erfolgen.

Weitere Vorteile ergeben sich aus den Unteransprüchen und der nachfolgenden Beschreibung bevorzugter Ausführungsbeispiele.

Im Folgenden wird die Erfindung anhand von in den Figuren dargestellten Ausführungsbeispielen näher erläutert. Es zeigen:
- Fig. 1: eine schematische Darstellung einer Hydraulikeinrichtung mit einer mittels einem Temperiermedium gekühlten Baueinheit aus einer durch einen Kühlmantel bzw. Kühlflansch temperierten Hydraulikpumpe und Servomotor in einem ersten Ausführungsbeispiel,
- Fig. 2: eine Darstellung gemäß Fig. 1 in einem weiteren Ausführungsbeispiel, wobei zusätzlich eine Steuereinrichtung für den Servomotor durch das Temperiermedium gekühlt wird,

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

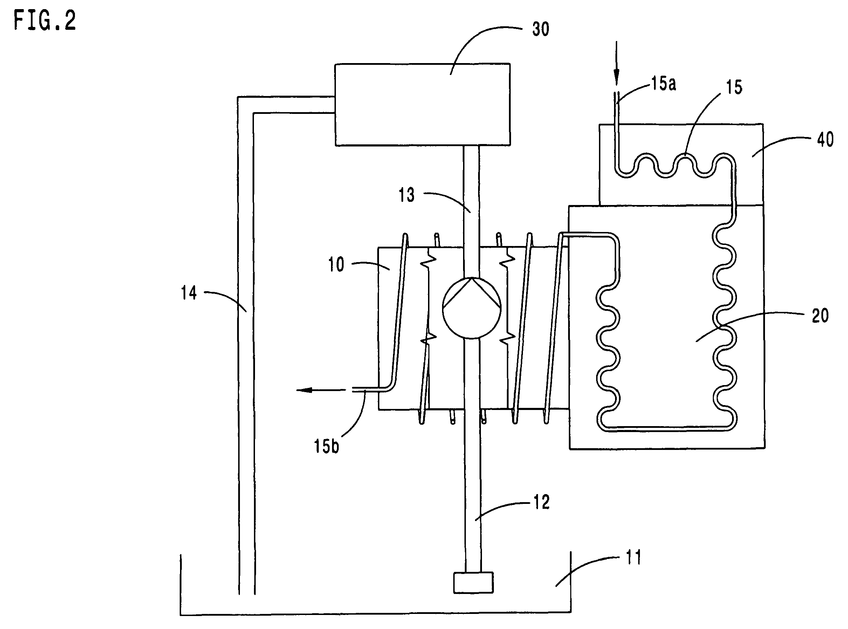

Die Figuren zeigen Hydraulikeinrichtungen, die zur Versorgung wenigstens eines Verbrauchers 30 mit Hydraulikmedium an einer Spritzgießmaschine zur Verarbeitung von Kunststoffen und anderen plastifizierbaren Massen, wie z.B. pulverigen oder metallischen Massen vorgesehen sind. Bei einer derartigen Hydraulikeinrichtung wird aus einem Sammelbehälter 11 Hydraulikmedium über die Hydraulikleitung 12 von einer Hydraulikpumpe 10 angesaugt. Die Hydraulikpumpe wird von einem Servomotor 20 angetrieben, wobei der Servomotor in zeichnerisch nicht dargestellter Weise geregelt in seiner Drehzahl nach den zyklusabhängigen Anforderungen der Verbraucher 30 an der Spritzgießmaschine betrieben wird. Hierzu ist in Fig. 2 ergänzend die Steuereinrichtung 40 dargestellt, d.h. in der Regel ein Umrichter, der Steuersignale von der Maschinensteuerung je nach Bedarf am Verbraucher 30 erhält und danach die Pumpe geregelt betreibt. Von der Hydraulikpumpe 10 gelangt das Hydraulikmedium über eine Hydraulikleitung 13 zu wenigstens einem Verbraucher 30, wobei verschiedene Verbraucher in der Regel seriell, bedarfsweise aber auch parallel mit Hydraulikmedium versorgt werden können. Das Hydraulikmedium gelangt vom Verbraucher über einen Rücklauf 14 wieder zum Sammelbehälter 11, um von dort neu angesaugt werden zu können. Hydraulikpumpe 10 als auch Servomotor 20 können auch im Sammelbehälter 11 angeordnet werden. Insofern kann auch das Hydraulikmedium im Sammelbehälter temperiert werden.

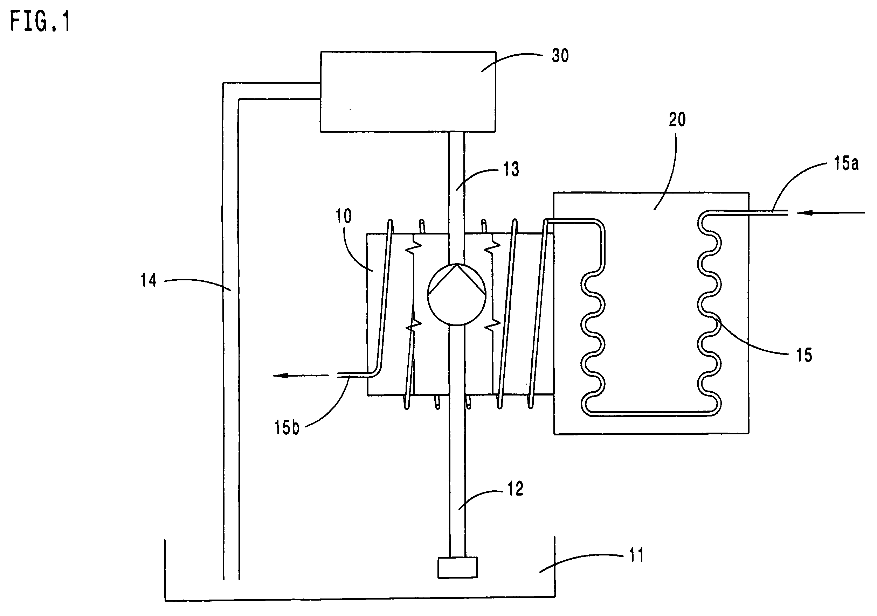

Zur Temperierung, d.h. meist zur Kühlung des Hydraulikmediums ist eine Temperiereinrichtung vorgesehen, von der in Figur 1 lediglich die Kühlleitung 15 mit ihrer Zuleitung 15a und ihrer Ableitung 15b zu sehen ist. Der Aufbau einer derartigen Temperiereinrichtung ist dem Fachmann bekannt. Durch die Kühlleitung 15 gelangt Temperiermedium, d.h. in der Regel Kühlmittel an die zu kühlenden Komponenten. Dabei ist insbesondere die Hydraulikpumpe 10 durch das temperierte Hydraulikmedium und/oder durch das Temperiermedium temperierbar bzw. temperiert. Die das temperierte Hydraulikmedium enthaltende Hydraulikleitung 12,12' und/oder die das Temperiermedium enthaltende Kühlleitung 15 sind zudem durch bzw. an den Servomotor 20 geführt, wenn z.B. im letzteren Fall eine Flanschkühlung vorgesehen ist.

Im Ausführungsbeispiel der Figur 1 ist die Kühlleitung 15 durch den Servomotor 20 und an die Hydraulikpumpe 10 geführt, die damit beide durch das Temperiermedium temperiert sind. Damit wird also in den Servomotor direkt ein Temperiermedium wie Kühlwasser eingeleitet, das von dort unmittelbar weiter zur Hydraulikpumpe 10 fließt und diese ebenfalls kühlt. Die Flussrichtung ist so angelegt, dass das eintretende kalte Temperiermedium am Servomotor 20 eingeleitet wird und in Richtung der Hydraulikpumpe 10 fließt, wo es erwärmt austritt. Damit wird auch das Hydraulikmedium beim Verdichten über die Hydraulikpumpe 10 ebenfalls durch die Hydraulikpumpe 10 indirekt gekühlt. Das Gehäuse der Hydraulikpumpe 10 kann durch die Hydraulikleitung 12 und/oder die Kühlleitung 15 temperierbar bzw. temperiert sein. Dazu ist z.B. in Fig. 1 die Kühlleitung 15 - es könnte ebenso die temperierbare Hydraulikleitung 12 sein - als Kühlmantel für die Hydraulikpumpe 10 ausgebildet. Ergänzend zum Kühlmantel kann die Ausgestaltung gemäß Fig. 1 auch dadurch erfolgen, dass eine Flanschkühlung der Hydraulikpumpe in den Bereichen vorgesehen wird, in denen ein Anschluss ans restliche System der Hydraulikeinrichtung, also z.B. an die Hydraulikleitungen erfolgt.

Kommt es in dieser Ausführungsform oder auch beim folgenden Ausführungsbeispiel zu einem Zustand, in dem kein Öl mehr fließt, kann die anfallende Wärme dennoch über das Temperiermedium, das durch die Kühlleitung 15 gefördert wird, abgeführt werden. Dadurch wird die Hydraulikeinrichtung bzw. die Spritzgießmaschine energiesparsam betrieben.

Im Ausführungsbeispiel der Fig. 2 ist zusätzlich die Steuereinrichtung 40 von der Kühlleitung 15 durchflossen. Die Steuereinrichtung 40 kann in temperierender Wirkverbindung mit dem temperierten Servomotor stehen oder wie im Ausführungsbeispiel der Fig. 2 von der Kühlleitung 15 durchflossen werden. In beiden Fällen wird Wärme auch von der Steuereinrichtung 40 abgeleitet. Auch im Ausführungsbeispiel der Fig. 2 wird das Hydraulikmedium wieder indirekt durch die temperierte Hydraulikpumpe 10 temperiert.

Wenn im Rahmen dieser Anmeldung von Temperierung die Rede ist, so umfasst dies auch grundsätzlich eine Kühlung. In der Regel wird auch eine Kühlung erfolgen, d.h. das Temperiermedium ist ein Kühlmittel wie z.B. Wasser.

Im Ergebnis ergibt sich ein kompakter Antrieb, der in der Regel aus Hydraulikpumpe 10, Servomotor 20 und Steuereinrichtung 40 besteht. Dieser kompakte Antrieb kann mit möglichst einem durch all diese Teile geführten Kühlkreislauf gekühlt werden, wobei bedarfsweise auch die Steuereinrichtung 40 gesondert gekühlt wird. Eine Kühlung ist aber ebenso indirekt durch das in diesem kompakten Antrieb fließende Hydraulikmedium möglich. Hydraulikpumpe 10 und Servomotor 20 bilden eine kompakte Einheit, wobei die Steuereinrichtung für den Servomotor 20 direkt an diesen angeflanscht ist. Damit kann eine Kühlung durch aktives Kühlen wie in den Ausführungsbeispielen oder auch durch leitende Wärmeübertragung erfolgen.

### Bezugszeichenliste

- 10: Hydraulikpumpe
- 11: Sammelbehälter
- 12: Hydraulikleitung
- 13: Hydraulikleitung
- 14: Rücklauf
- 15: Kühlleitung
- 15a: Zuleitung
- 15b: Ableitung
- 20: Servomotor
- 30: Verbraucher
- 40: Steuereinrichtung (Umrichter)

## Patentansprüche

1. Hydraulikeinrichtung zur Versorgung wenigstens eines Verbrauchers (30) mit Hydraulikmedium an einer Spritzgießmaschine zur Verarbeitung von Kunststoffen und anderen plastifizierbaren Massen
- mit einer mit einer Kühlleitung (15) versehenen Temperiereinrichtung zum Temperieren des Hydraulikmediums mittels eines Temperiermediums,
- mit einer durch das temperierte Hydraulikmedium und durch das Temperiermedium temperierbaren Hydraulikpumpe (10), durch die das Hydraulikmedium über wenigstens eine Hydraulikleitung (12, 13) zum Verbraucher gefördert wird
- mit einem an der Hydraulikpumpe (10) angeschlossenen Servomotor (20) für die Hydraulikpumpe (10), durch bzw. an den die das Temperiermedium enthaltende Kühlleitung (15) geführt ist,
**dadurch gekennzeichnet, dass** die Kühlleitung (15) einen Kühlmantel für die Hydraulikpumpe (10) ausbildet und durch die Hydraulikpumpe oder einen Teil davon (10) geführt ist, wobei das Temperiermedium das Hydraulikmedium mittelbar über die Hydraulikpumpe (10) temperiert.

2. Hydraulikeinrichtung nach Anspruch 1, **dadurch gekennzeichnet, dass** die Kühlleitung (15) nacheinander durch den Servomotor (20) und von dort durch die Hydraulikpumpe (10) geführt ist.

3. Hydraulikeinrichtung nach Anspruch 1 oder 2, **dadurch gekennzeichnet, dass** die das Temperiermedium enthaltende Kühlleitung (15) durch eine Steuereinrichtung (40) für den Servomotor (20) geführt ist.

4. Hydraulikeinrichtung nach Anspruch 1 oder 2, **dadurch gekennzeichnet, dass** eine Steuereinrichtung (40) für den Servomotor (20) in temperierender Wirkverbindung mit dem temperierten Servomotor (20) steht bzw. am temperierten Servomotor (20) anliegt.

5. Hydraulikeinrichtung nach einem der vorhergehenden Ansprüche, **dadurch gekennzeichnet, dass** das Temperiermedium ein Kühlmittel wie Wasser ist.

## Claims

1. Hydraulic device for supplying at least one consumer (30) with hydraulic medium at an injection molding machine for processing plastics and other plastifiable masses comprising
- a temperature control device for tempering the hydraulic medium by means of a tempering medium, the temperature control device comprising a cooling line (15),
- a hydraulic pump (10), which can be tempered by the tempered hydraulic medium and by the tempering medium and through which the hydraulic medium is conveyed to the consumer via at least one hydraulic line (12, 13),
- a servomotor (20) for the hydraulic pump (10) and coupled to the hydraulic pump (10), through which or to which the cooling line (15) containing the tempered medium is led,
**characterized in that** the cooling line (15) forms a cooling jacket for the hydraulic pump (10) and is led trough the hydraulic pump (10) or a part thereof, wherein the tempering medium tempers indirectly the hydraulic medium via the hydraulic pump (10).

2. Hydraulic device according to claim 1, **characterized in that** the hydraulic line (15) is successively led through the servomotor (20) and from there through the hydraulic pump (10).

3. Hydraulic device according to claim 1 or 2, **characterized in that** the cooling line (15) containing the tempering medium is led through a control device (40) for the servomotor (20)

4. Hydraulic device according to claim 1 or 2, **characterized in that** the control device (40) for the servomotor (20) is in tempering operative connection with the tempered servomotor (20) or is adjacent to the tempered servomotor (20)

5. Hydraulic motor according to one of the preceding claims, **characterized in that** the tempering medium is a cooling means like water.

## Revendications

1. Dispositif hydraulique pour l'alimentation d'au moins un utilisateur (30) en milieu hydraulique sur une machine à mouler par injection pour la fabrication de matières plastiques et d'autres masses plastifiables comportant
- un dispositif de régulation de température pourvu d'une conduite de refroidissement (15) pour réguler la température du milieu hydraulique au moyen d'un milieu de régulation de température,
- une pompe hydraulique (10) susceptible d'être régulée en température par le milieu hydraulique régulé en température et par le milieu de régulation de température, grâce à laquelle le milieu hydraulique est fourni à l'utilisateur par l'intermédiaire d'au moins une conduite hydraulique (12, 13),
- un servomoteur (20) raccordé à la pompe hydraulique (10) pour la pompe hydraulique (10), par lequel ou auquel la conduite de refroidissement (15) contenant le milieu de régulation de température est amenée,
**caractérisé en ce que** la conduite de refroidissement (15) forme un manchon de refroidissement pour la pompe hydraulique (10) et est amenée à travers la pompe hydraulique (10) ou une partie de celle-ci, le milieu de régulation de température régulant la température du milieu hydraulique indirectement au moyen de la pompe hydraulique (10).

2. Dispositif hydraulique selon la revendication 1, **caractérisé en ce que** la conduite de refroidissement (15) est amenée d'abord par le servomoteur (20) et de là par la pompe hydraulique (10).

3. Dispositif hydraulique selon la revendication 1 ou 2, **caractérisé en ce que** la conduite de refroidissement (15) contenant le milieu de régulation de température est amenée par un dispositif de commande (40) pour le servomoteur (20).

4. Dispositif hydraulique selon la revendication 1 ou 2, **caractérisé en ce que** le dispositif de commande (40) pour le servomoteur (20) est en liaison fonctionnelle de régulation de température avec le servomoteur régulé en température (20) ou est adjacent au servomoteur régulé en température (20).

5. Dispositif hydraulique selon l'une des revendications précédentes, **caractérisé en ce que** le milieu de régulation de température est un moyen de refroidissement comme l'eau.
